# DEMANDE DE BREVET EUROPEEN

(11) **EP 1 380 548 A1**
(43) Date de publication de la demande: **14.01.2004**
(21) Numéro de dépôt: 03356105.1
(22) Date de dépôt: 08.07.2003
(51) Int. Cl.: C03B 23/03, C03B 23/025

(54) **Machine de pressage-cintrage de feuilles de verre**

(30) Priorité: 09.07.2002 FR 0208622
(71) Demandeur: G.M.C. For Glass Industry Pour l'industrie du Verre, 69200 Venissieux (FR)
(72) Inventeur: Marmonier, Guy Marcel Gilbert Roland, 69200 Venissieux (FR)
(74) Mandataire: Myon, Gérard

(57) **Abrégé**

La matrice (6) de cette machine est pourvue d'un ensemble périphérique (61, 63) qui comprend des éléments transversaux (61), qui peuvent supporter les bords transversaux (21, 22) des feuilles de verre (2) et s'étendent globalement chacun selon une direction perpendiculaire à la direction d'avance (X-X') des feuilles de verre (2) supportées par des rouleaux (31) globalement horizontaux, et des éléments longitudinaux (63) disposés le long de deux bords (B₆, B'₆) de l'ensemble périphérique (61, 63) globalement parallèles à la direction d'avance (X-X'), ces éléments longitudinaux (63) étant destinés à supporter les bords longitudinaux (23, 24) des feuilles de verre (2) au cours de leur cintrage. Les éléments longitudinaux (63) sont réglables, selon une direction (Z-Z') parallèle à la direction du mouvement relatif des organes (6) formant matrice et poinçon de la machine, indépendamment des éléments transversaux (61).

## Description

L'invention a trait à une machine de pressage-cintrage de feuilles de verre plat.

Il est connu de conformer des feuilles de verre plat au moyen de machines dites « presses » telles que connues, par exemple, de US-A-4,305,746, de US-A-3,734,706, de US-A-5,372 624, de US-A-5,716,425 ou de US-A-5,273,635. Dans ces machines connues, deux parties, respectivement mâle et femelle, sont déplacées l'une par rapport à l'autre pour comprimer entre elles les feuilles de verre et les conformer selon une géométrie prédéterminée. Ces parties mâle et femelle doivent être changées lorsque la géométrie souhaitée pour les feuilles de verre évolue. En d'autres termes, en cas de changement du profil recherché pour les feuilles de verre, les éléments de conformation mâle et femelle doivent être démontés et de nouveaux éléments doivent être montés, ce qui est onéreux et induit des interruptions prolongées de la fabrication.

C'est à ces inconvénients qu'entend plus particulièrement remédier l'invention en proposant une nouvelle machine plus flexible et plus aisée à utiliser que celles de l'état de la technique.

Dans cet esprit, l'invention concerne une machine de pressage-cintrage de feuilles de verre comprenant des rouleaux susceptibles de mouvements de rotation autour de leurs axes centraux respectifs qui sont globalement perpendiculaires à une direction d'avance des feuilles de verre et globalement horizontaux, ces rouleaux permettant le déplacement des feuilles selon cette direction, des organes mâle et femelle de conformation des feuilles, l'un au moins de ces organes étant pourvu d'un ensemble périphérique destiné à venir en appui contre les bords des feuilles de verre qui comprend :
- des éléments transversaux qui sont aptes à supporter les bords transversaux des feuilles de verre et s'étendent globalement chacun selon une direction perpendiculaire à la direction d'avance et
- des éléments longitudinaux disposés le long d'au moins un bord de cet ensemble périphérique globalement parallèle à la direction d'avance, ces éléments longitudinaux étant destinés à supporter au moins un bord longitudinal des feuilles de verre au cours de leur cintrage, certains rouleaux s'étendant entre les éléments longitudinaux d'un bord à l'autre de cet ensemble périphérique,
caractérisés en ce que les éléments longitudinaux sont réglables, selon une direction parallèle à la direction du mouvement relatif des organes de conformation, indépendamment des éléments transversaux.

Grâce à l'invention, la géométrie obtenue pour une feuille de verre cintrée ou bombée, peut être définie par un réglage approprié, d'une part, des éléments transversaux et, d'autre part, des éléments longitudinaux de l'ensemble périphérique de l'organe de conformation. Les rouleaux de support et convoyage qui s'étendent d'un bord à l'autre de l'ensemble périphérique supportent efficacement les feuilles de verre et les éléments longitudinaux réglables sont compatibles avec ces rouleaux. En cas de changement de profil des feuilles de verre à réaliser, les éléments transversaux peuvent être changés, les éléments longitudinaux demeurant en place sur la machine et étant réglés pour tenir compte du nouveau profil. L'invention permet également d'ajuster la pression exercée par les organes formant matrice et poinçon sur les bords longitudinaux des feuilles de verre, ce qui permet de corriger certains défauts constatés en cours de fabrication. Ainsi, l'invention permet un changement rapide de fabrication, sans modification des rouleaux du dispositif de convoyage/support, et une grande souplesse en cours de production.

Selon des aspects avantageux mais non obligatoires de l'invention, cette machine incorpore une ou plusieurs des caractéristiques mentionnées dans les revendications dépendantes ci-annexées.

L'invention sera mieux comprise et d'autres avantages de celle-ci apparaîtront plus clairement à la lumière de la description qui va suivre de deux modes de réalisation d'une machine conforme à son principe, donnée uniquement à titre d'exemple et faite en référence aux dessins annexés dans lesquels :
- la figure 1 est une coupe transversale de principe d'une machine conforme à l'invention ;
- la figure 2 est une vue de côté de la machine de la figure 1 ;
- la figure 3 est une vue partielle en perspective de la machine des figures 1 et 2 ;
- la figure 4 est une vue à plus grande échelle du détail IV à la figure 1 ;
- la figure 5 est une coupe à plus grande échelle du détail V à la figure 3 et
- la figure 6 est une vue analogue à la figure 4, pour une machine conforme à un second mode de réalisation de l'invention.

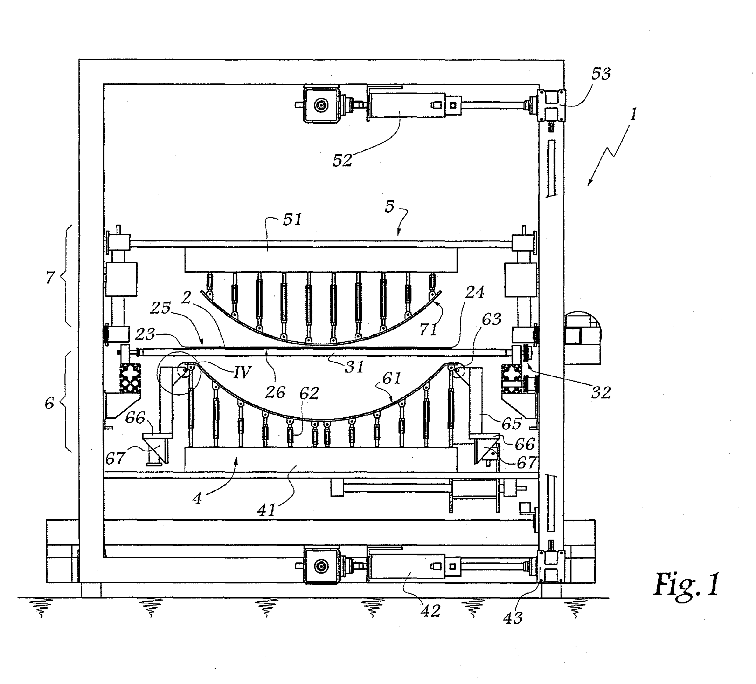

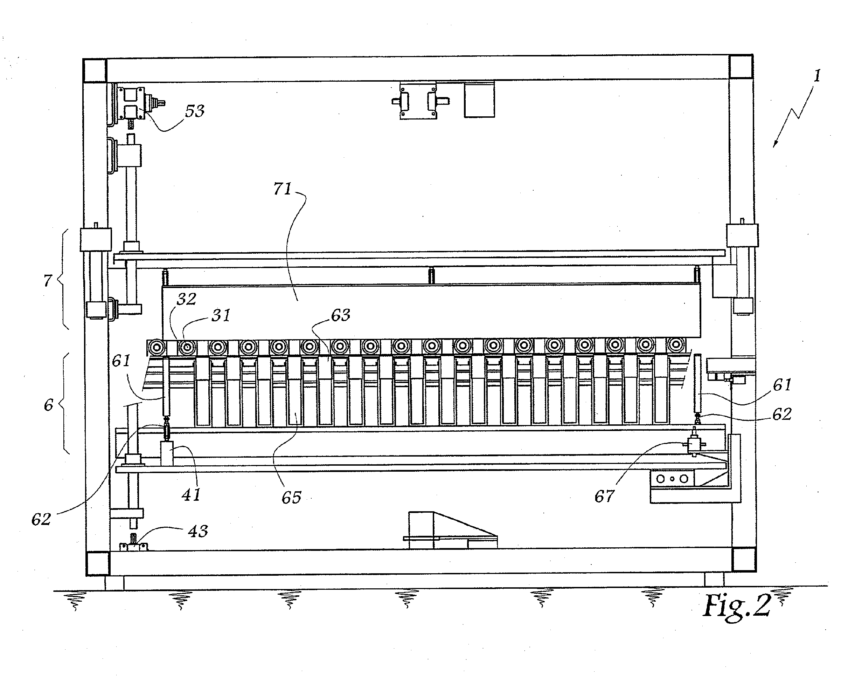

La machine 1 représentée aux figures 1 à 5 est destinée à la mise en forme de feuilles de verre 2 sortant d'un four de chauffage non représenté. Le chauffage à l'intérieur du four peut avoir lieu par radiation, conduction, convection et/ou toute autre méthode appropriée.

Les feuilles 2 sont déplacées par un convoyeur 3 selon une direction d'avance X-X'.

On note 21 le bord avant d'une feuille 2, ce bord étant globalement perpendiculaire à la direction X-X'. On note 22 le bord arrière d'une feuille 2 opposé au bord avant. On note respectivement 23 et 24 les bords latéraux ou longitudinaux d'une feuille 2. On note respectivement 25 et 26 les faces supérieure et inférieure d'une feuille 2.

Le convoyeur 3 comprend des rouleaux 31 susceptibles de mouvements de rotation autour de leur axes centraux respectifs qui sont globalement perpendiculaires à la direction X-X' et globalement horizontaux, ce qui leur permet de supporter les feuilles 2 dont les surfaces 26 sont en appui sur les génératrices supérieures des rouleaux 31.

Certains ou tous les rouleaux 31 peuvent être entraînés en rotation par un moteur 32.

La machine 1 comporte un plateau de presse inférieur 4 et un plateau de presse supérieur 5, ces plateaux 4 et 5 étant susceptibles d'un mouvement de rapprochement ou d'écartement selon une direction Z-Z' perpendiculaire à la direction X-X' et, en pratique, globalement verticale.

Le plateau inférieur 4 comprend plusieurs poutres 41 qui supportent un organe de moule femelle ou matrice 6. Le plateau supérieur 5 comprend des poutres 51 qui supportent un organe mâle ou poinçon 7.

Des moyens, tels que des moteurs électriques 42 et 52 associés à des renvois d'angles 43 et 53 et à des moyens de guidage linéaire non représentés sont respectivement prévus pour déplacer les plateaux 4 et 5 et les organes 6 et 7 parallèlement à la direction Z-Z'.

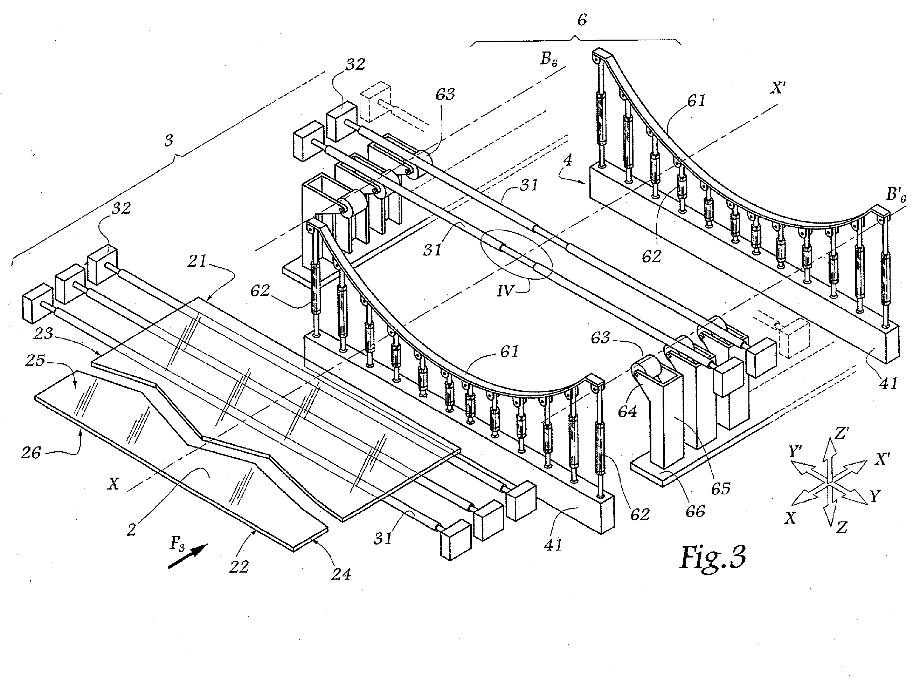

L'organe 6 est plus particulièrement visible à la figure 3. Il comprend deux ceintures 61 s'étendant selon des directions globalement parallèles à une direction Y-Y' elle-même perpendiculaire aux directions X-X' et Z-Z'. Les ceintures 61 sont reliées chacune à une poutre 41 par des supports réglables 62. Les ceintures 61 définissent la géométrie du profil d'une feuille de verre après cintrage et sont réglables selon la direction Z-Z' grâce aux supports 62.

Les ceintures 61 sont disposées respectivement à proximité des deux bords transversaux de l'organe 6, c'est-à-dire de ses bords avant et arrière.

Certains rouleaux d'entraînement 31 s'étendent entre les ceintures 61, d'un bord à l'autre de l'organe 6. Ils supportent donc efficacement les feuilles de verre 2 et ne sont pas déplacés verticalement ou transversalement.

Des rouleaux 63 sont alignés le long de deux bords longitudinaux B₆ et B'₆ de l'organe 6. Plus précisément, les rouleaux 63 sont intercalés entre les rouleaux 31, les axes respectifs X₆₃ des rouleaux 63 étant alignés avec les bords B₆ ou B'₆ qui sont globalement rectilignes et parallèles à la direction X-X'.

A la figure 3, seuls quelques rouleaux 63 ont été représentés pour la clarté du dessin. En pratique, le nombre de rouleaux 63 dépend de la longueur souhaitée pour l'organe formant matrice 6.

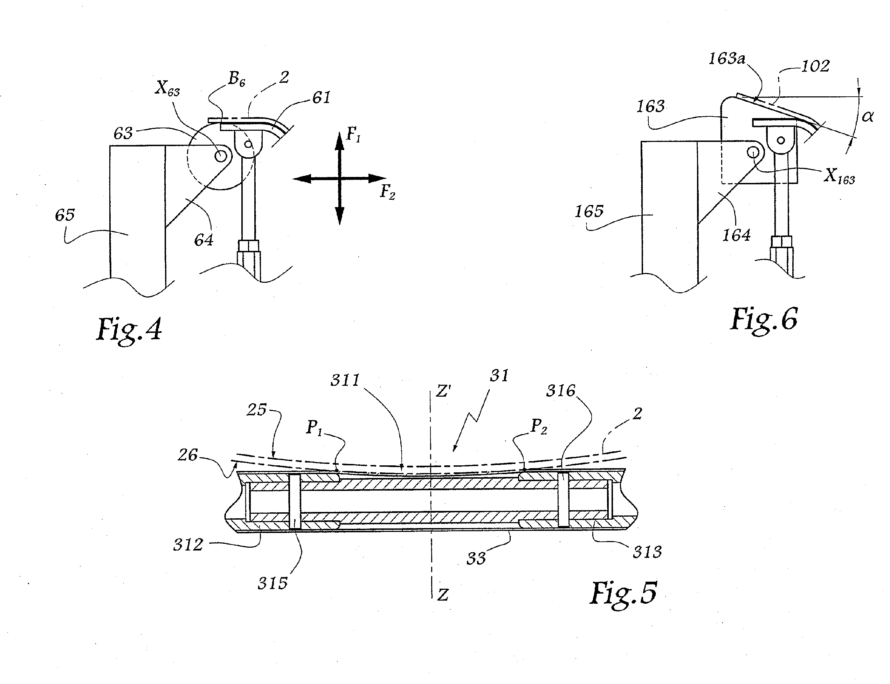

Chaque rouleau 63 est monté sur une équerre 64 supportée par un poteau 65, tous les poteaux 65 d'un même bord longitudinal B₆ ou B'₆ étant eux-mêmes supportés par une poutre 66 susceptible de mouvements verticaux et horizontaux par rapport au plateau 4, ces mouvements étant représentés par les doubles flèches F₁ et F₂ à la figure 4 et étant respectivement parallèles aux directions Z-Z' et Y-Y'. Des vérins mécaniques 67 sont prévus pour déplacer la poutre 66 et les éléments qu'elle porte, au niveau de chaque bord B₆ ou B'₆ de l'organe 6 par rapport au plateau 4. Il est ainsi possible d'ajuster la position des rouleaux 63 par rapport au plateau 4 indépendamment du réglage de la position des ceintures 61 par rapport à celui-ci.

Les vérins 67 peuvent être entraînés par des moteurs électriques. Des vérins pneumatiques, hydrauliques ou électriques peuvent être utilisés à la place des vérins mécaniques 67.

Le réglage de la position des rouleaux est indépendant des ceintures 61 et des rouleaux 31, ces rouleaux n'étant pas déplacés lors de ce réglage.

Comme il ressort plus particulièrement de la figure 5, chaque rouleau 31 est pourvu d'une zone en creux 311 dans sa partie centrale, cette zone en creux permettant de recevoir et de guider une feuille de verre cintrée, comme représentée en traits mixtes sur cette figure. Plus précisément, chaque rouleau 31 comprend un tube 312 de diamètre relativement petit inséré dans deux tubes 313 et 314 de diamètre plus important, les tubes 312 et 313, d'une part, 312 et 314, d'autre part, étant immobilisés les uns par rapport aux autres grâce à des goupilles 315 et 316. La zone 311 est ainsi formée par la différence des diamètres externes des tubes 312, 313 et 314. La génératrice du rouleau 31, qui est formée par la réunion des génératrice des tubes 313, 312 et 314, est ainsi concave au niveau de la zone 311. Ainsi, l'appui de la feuille de verre cintrée sur le rouleau 31 peut avoir lieu en deux points P₁ et P₂ ou sur une ligne, ce qui permet un guidage longitudinal de la feuille de verre cintrée. En variante, et en fonction du rayon de courbure de la feuille 2 dans sa partie centrale la feuille de verre 2 peut être guidée en un seul point situé au fond de la zone 311.

Chaque rouleau 31 est entouré d'une gaine 33 réalisée en fibres d'aramide, en silice ou en micro-fils métalliques et suffisamment souple pour se déformer au niveau de la zone 311 dans la partie sur laquelle repose la feuille 2.

Au vu de ce qui précède, on comprend qu'il est possible, au début d'une production de feuilles de verre bombées, de monter deux ceintures 61 sur les bords avant et arrière d'un organe 6 formant matrice en fonction de la forme à donner aux feuilles de verre. La position des ceintures 61 par rapport aux poutres 41 est réglée grâce aux supports 62 qui comprennent avantageusement des vis micro-métriques.

Il est alors possible de régler la position des rouleaux 63 en hauteur, c'est-à-dire selon la direction Z-Z', et en largeur, c'est-à-dire selon la direction Y-Y', pour disposer les bords longitudinaux B₆ et B'₆ de l'organe 6 dans le prolongement des extrémités latérales des ceintures 61. Là encore des vis micro-métriques peuvent, le cas échéant, être utilisées en combinaison avec les vérins 67.

Lorsque ce réglage a été effectué, il est conservé pour un grand nombre de feuilles qui sont alors cintrées en étant acheminées dans le sens de la flèche F₃ à la figure 3 depuis la sortie du four non représenté jusque au-dessus de l'organe 6, ceci grâce au convoyeur 3. L'organe 6 est alors soulevé grâce à un mouvement correspondant du plateau 4, alors que l'organe 7 s'est abaissé, de telle sorte que la feuille 2 est pressée entre ces organes, tout particulièrement entre les éléments 61 et 63 de l'organe 6 et des éléments correspondants de l'organe 7. A cet égard, on note que les éléments 61 à 63 forment un ensemble périphérique d'appui des bords 21, 22, 23 et 24 d'une plaque 2 lors de son cintrage entre la matrice 6 et le poinçon 7.

Le poinçon peut avoir différentes géométries. Il peut comprendre une plaque de conformation 71 s'étendant sur toute la surface des feuilles 21. En variante, il peut comprendre des ceintures dont la géométrie est adaptée à celle des ceintures 61. Il peut également être équipé de rouleaux analogues aux rouleaux 63 de l'organe 6.

On comprend que le réglage indépendant des ceintures 61, d'une part, et des rouleaux 63 d'autre part, permet d'ajuster les efforts exercés sur les feuilles 2 en cours de cintrage, ces efforts pouvant être adaptés sans démontage de ces éléments.

Dans le second mode de réalisation de l'invention représenté partiellement à la figure 6, les éléments analogues à ceux du premier mode de réalisation portent des références identiques augmentées de 100. Dans ce mode de réalisation, des patins 163 sont utilisés à la place des rouleaux 63 du premier mode de réalisation, ces patins étant articulés, autour d'un axe X₁₆₃ parallèle à la direction de convoyage X-X', sur des équerres 164 montées sur des poteaux 165. Comme représenté en traits mixtes, une plaque de verre cintrée 102 vient en appui sur la face supérieure 163a d'un patin 163, cette face étant faiblement inclinée, d'un angle α inférieur à 20° par rapport à l'horizontale, définie par le plan comprenant les directions X-X' et Y-Y' la face 163a de chaque patin 163 peut également être horizontale.

## Revendications

1. Machine de pressage-cintrage de feuilles de verre comprenant :
- des rouleaux (31) susceptibles de mouvements de rotation autour de leurs axes centraux respectifs qui sont globalement perpendiculaires à une direction (X-X') d'avance des feuilles de verre et globalement horizontaux, ces rouleaux permettant le déplacement des feuilles selon ladite direction et
- des organes mâle (7) et femelle (6) de conformation des feuilles, l'un au moins desdits organes étant pourvu d'un ensemble périphérique destiné à venir en appui contre les bords des feuilles de verre qui comprend :
- des éléments transversaux (61), aptes à supporter les bords transversaux (21, 22) des feuilles de verre (2 ; 102) et s'étendant globalement chacun selon une direction (Y-Y') perpendiculaire à ladite direction d'avance (X-X') et
- des éléments longitudinaux (63 ; 163) disposés le long d'au moins un bord (B₆, B'₆) dudit ensemble périphérique globalement parallèle à ladite direction d'avance (X-X'), lesdits éléments étant destinés à supporter au moins un bord longitudinal (22, 24) des feuilles au cours de leur cintrage, certains rouleaux (31) s'étendant entre lesdits éléments longitudinaux (63 ; 163) d'un bord à l'autre (B₆, B'₆) dudit ensemble périphérique (61, 63 ; 163)
**caractérisée en ce que** lesdits éléments longitudinaux (63 ; 163) sont réglables (F₁), selon une direction (Z-Z') parallèle à la direction du mouvement relatif desdits organes de conformation (6, 7), indépendamment desdits éléments transversaux (61).

2. Machine selon la revendication 1, **caractérisée en ce que** lesdits éléments longitudinaux (63 ; 163) sont également réglables (F₂) selon une direction (Y-Y') perpendiculaire à la direction d'avance (X-X') des feuilles (2 ; 102) et à la direction (Z-Z') du mouvement relatif desdits organes mâle et femelle (6, 7).

3. Machine selon l'une des revendications précédentes, **caractérisée en ce que** lesdits éléments longitudinaux (63 ; 163) disposés le long d'un (B₆) desdits bords sont réglables (F₁, F₂), selon l'une ou l'autre ou les deux directions (Z-Z', Y-Y'), indépendamment des éléments longitudinaux (63 ; 163) disposés le long de l'autre bord (B'₆).

4. Machine selon l'une des revendications précédentes, **caractérisée en ce que** lesdits éléments longitudinaux sont des rouleaux (63) montés fous autour d'un axe de rotation (X₆₃).

5. Machine selon la revendication 4, **caractérisée en ce que** ledit axe de rotation (X₆₃) est globalement parallèle à la direction d'avance (X-X') des feuilles de verre (2 ; 102).

6. Machine selon l'une des revendications 1 à 3, **caractérisée en ce que** lesdits éléments longitudinaux sont des patins (163).

7. Machine selon la revendication 6, **caractérisée en ce que** les surfaces supérieures (163a) desdits patins sont orientées, préférentiellement, dans un plan globalement horizontal ou légèrement incliné (α).

8. Machine selon l'une des revendications précédentes, **caractérisée en ce que** lesdits éléments transversaux sont des ceintures (61) continues s'étendant sur toute la largeur des feuilles (2) et reliées à une structure porteuse (4) par des supports réglables (62).

9. Machine selon l'une des revendications précédentes, **caractérisée en ce que** lesdits rouleaux (31) ont une section transversale réduite dans une zone centrale (311) desdits rouleaux, ladite zone étant formée par la différence entre le diamètre externe d'un premier tube (312) et les diamètres externes de deux autres tubes (313, 314) dans lesquels est inséré et immobilisé le premier tube.

10. Machine selon la revendication 9, **caractérisée en ce que** lesdits rouleaux (31) sont entourés d'une gaine déformable (33).
